## Europäisches Patentamt
## European Patent Office
## Office européen des brevets

(19)

(11) Veröffentlichungsnummer: **0 113 022**
**B1**

(12)

# EUROPÄISCHE PATENTSCHRIFT

(45) Veröffentlichungstag der Patentschrift:
31.05.89

(21) Anmeldenummer: 83111701.5

(22) Anmeldetag: 23.11.83

(51) Int. Cl.⁴: **H 04 M 11/08**

(54) **Bildschirmtextsystem mit öffentlichen Endgeräten.**

(30) Priorität: 30.11.82 DE 3244212

(43) Veröffentlichungstag der Anmeldung:
11.07.84 Patentblatt 84/28

(45) Bekanntmachung des Hinweises auf die Patenterteilung:
31.05.89 Patentblatt 89/22

(84) Benannte Vertragsstaaten:
AT BE CH DE GB IT LI NL SE

(56) Entgegenhaltungen:
EP-A-0 011 070
DE-A-2 950 296

BRITISH TELECOMMUNICATIONS ENGINEERING,
Band 1, Nr. 1, April 1982, Seiten 35-41, London, GB;
G.P. HUDSON: "Prestel terminals"

(73) Patentinhaber: ALCATEL N.V., Strawinskylaan 537
(World Trade Center), NL- 1077 XX Amsterdam
(NL)
(84) Benannte Vertragsstaaten: BE CH GB IT LI NL SE AT

(73) Patentinhaber: Standard Elektrik Lorenz
Aktiengesellschaft, Hellmuth- Hirth- Strasse 42,
D-7000 Stuttgart 40 (DE)
(84) Benannte Vertragsstaaten: DE

(72) Erfinder: Simon, Gerhard Jakob, Eugen- Bolz-
Strasse 1, D-7251 Hemmingen (DE)
Erfinder: Schneider, Gerhard, Friedrich- Haug-
Strasse 26, D-7250 Leonberg (DE)

(74) Vertreter: Beck- Seyffer, Karl Heinz, Dipl.- Ing.,
Standard Elektrik Lorenz AG Patent- und
Lizenzwesen Postfach 30 09 29, D-7000 Stuttgart
30 (DE)

EP 0 113 022 B1

## Beschreibung

Die Erfindung betrifft ein Bildschirmtextsystem mit öffentlichen Endgeräten, mit denen Informationen über ein Fernmeldenetz aus einer Bildschirmtext-Zentrale abgerufen und in Form von Bildschirmtext-Seiten auf dem Bildschirm des Endgerätes dargestellt werden; wobei das Endgerät mit einem Speicher versehen ist, in dem Informationen enthalten sind, die als Off-line-Bildschirmtextseiten (OBS) auf dem Bildschirm dargestellt werden.

Bildschirmtext ist bekanntlich ein Informations- und Kommunikationssystem, bei dem zur Übermittlung von Nachrichten das Fernsprechnetz mitbenützt wird. Teilnehmer, die einen Telefonanschluß und ein Fernsehgerät besitzen, können über das Fernsprechnetz von einer Bildschirmtext-Zentrale Nachrichten abrufen und in Form von sogenannten Bildschirmtext-Seiten auf dem Bildschirm ihres Fernsehgerätes darstellen (DE-PS-2 850 252). Darüberhinaus gibt es auch öffentliche Bildschirmtext-Endgeräte oder -Terminals, die z. B. in Bahnhöfen, wo Reisende Fahrplanauskünfte benötigen, oder in Postämtern, wo Kunden am Postscheckdienst teilnehmen können, aufgestellt sind.

Bei derartigen öffentlichen Bildschirmtext (Btx)-Terminals werden auch sogenannte Off-line-Bildschirmtextseiten (OBS) auf dem Bildschirm dargestellt, das sind Btx-Seiten im Off-line-Betrieb, bei dem das Terminal nicht mit seiner Btx-Zentrale verbunden ist. OBS-Seiten sind z. B. Hinweisseiten, die Informationen für den Benutzer enthalten, Werbeseiten, die Werbung enthalten, und Bedienseiten, die den Benutzer bei der Bedienung des Terminals führen. In der Regel werden diese Seiten dem Benutzer als Wechselbilder für eine vorgegebene Zeit in einem bestimmten Rhythmus gezeigt. Die Informations- und Steuerzeichen, aus denen die OBS-Seiten als Videobild aufgebaut werden, sind dabei in einem in dem Terminal vorgesehenen Festwertspeicher, z. B. einem EPROM-Speicher, abgelegt.

Nun müssen aber die OBS-Seiten von Zeit zu Zeit aktualisiert werden, z. B. wenn die Werbung geändert wird. Entsprechendes gilt für die sog. Geräte- oder Betriebsparameter, z. B. Gebühren, Zeiten, Seitennummern für freien oder gesperrten Zugang usw., die ebenfalls in dem Fest-Wertspeicher abgelegt sind. Bei bekannten öffentlichen Btx-Terminals müssen bei jeder Änderung der OBS-Seiten die Festwertspeicher ausgetauscht werden. Ist eine große Anzahl öffentlicher Btx-Terminals installiert, so ist das Austauschen der Festwertspeicher zeitraubend, umständlich und teuer.

In einer bekannten Sichtanzeigevorrichtung (DE-A-2 950 296) erfolgt eine Anzeige von Informationen von einer Fernstation als Antwort auf eine Abfrage nach dieser Information, wobei die Abfrage über die Sichtanzeigevorrichtung zu der Fernstation übermittelt wird. Dazu ist die Sichtanzeigevorrichtung mit einem elektrisch veränderlichem Speicher versehen, der Daten für die Verwendung durch eine Zentraleinheit speichert, wobei die gespeicherten Daten aufgrund elektrischer Signale veränderbar sind, die über eine Leitung von der Fernstation oder von dem Benutzer der Sichtanzeigevorrichtung empfangen werden.

Der Erfindung liegt die Aufgabe zugrunde, das Aktualisieren von in den Bildschirmtext-Terminals abzuspeichernden Informationen zu erleichtern.

Diese Aufgabe wird bei einem Bildschirmtextsystem der eingangs genannten Art erfindungsgemäß dadurch gelöst, daß der Speicher als Schreib-Lese-Speicher ausgebildet ist; daß eine zentrale Bedienungseinrichtung vorgesehen ist, die ein Editiergerät aufweist, in welchem eine Off-line-Bildschirmtextseite ergebende Informations- und Steuerzeichen erstellt werden, und daß diese Zeichen von der Bedienungseinrichtung (16) an die Bildschirmtext-Zentrale (1) übermittelt werden, von der sie über das Fernmeldenetz (2) in den Schreib-Lese-Speicher (46) übertragbar sind.

In zweckmäßiger Weiterbildung der Erfindung werden in dem Editiergerät auch Betriebsparameter erstellt, in den Speicher (6) der Bildschirmtext-Zentrale (1) geladen und über das Fernmeldenetz (2) in den Schreib-Lese-Speicher (46) übertragen werden.

Enthält die zentrale Bedienungseinrichtung einen Diagnoserechner, in welchem Test- und Diagnoseprogramme erzeugt werden, so können diese über das Fernmeldenetz ebenfalls in den Schreib-Lese-Speicher geladen und von einem Steuerrechner des Endgerätes abgearbeitet werden. Die Ergebnisse der Test- und Diagnoseprogramme werden durch den Steuerrechner entweder auf dem Bildschirm des Endgeräts dargestellt oder zu der Bedienungseinrichtung übertragen.

Vorteilhafte Weiterbildungen der Erfindung sind in den weiteren Patentansprüchen gekennzeichnet.

Ein Ausführungsbeispiel der Erfindung wird im folgenden anhand der Zeichnung erläutert. Es zeigen:

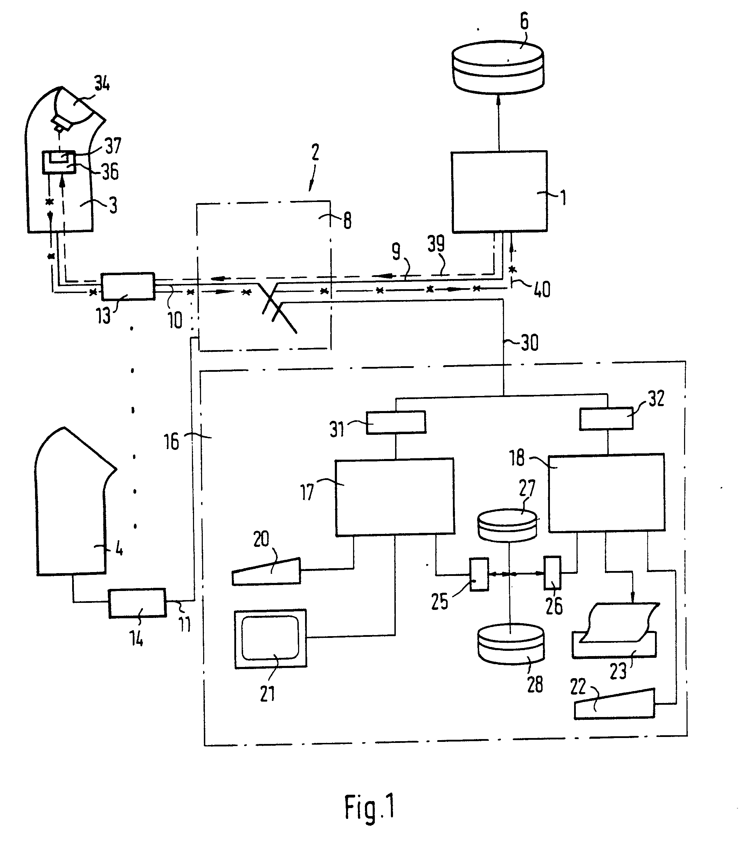

Fig. 1 ein erfindungsgemäßes Bildschirmtextsystem mit öffentlichen Endgeräten, und
Fig. 2 das Blockschaltbild eines öffentlichen Endgeräts des Bildschirmtextsystems nach Fig. 1

Ein Bildschirmtextsystem besteht im wesentlichen aus einer Btx-Zentrale 1, die über das Fernsprechnetz 2 mit den Endgeräten, im vorliegenden Fall mit öffentlichen Btx-Terminals 3 und 4 verbunden ist. Die Zentrale 1 weist einen Massenspeicher 6 auf, in dem die von den Benutzern bei ihr abzurufenden Informationen abgespeichert sind.

Von dem Fernsprechnetz sind in der Zeichnung nur eine Vermittlungsstelle 8 schematisch dargestellt, die durch Teilnehmer-Anschlußleitungen 9, 10 und 11 mit der Zentrale 1, dem Terminal 3 bzw. dem Terminal 4 verbunden ist.

Die Terminals 3, 4 sind an die Anschlußleitungen 10, 11 jeweils über ein Modem 13, 14 angeschlossen, das eine Übertragung der Bild- und sonstigen Informationen im Sprachband über das Fernsprechnetz ermöglicht. Die Zentrale 1 ist mit entsprechenden Modems ausgerüstet, die in der Zeichnung aber nicht dargestellt sind.

An die Btx-Zentrale 1 ist eine Bedienungseinrichtung 16 angeschlossen, die im wesentlichen ein Editiergerät 17 und einen Diagnoserechner 18 für öffentliche Btx-Terminals aufweist. Für die Bedienung des Editiergeräts sind eine Tastatur 20 und ein Videoterminal 21 vorgesehen. Die Bedienung des Diagnoserechners 18 erfolgt über eine Tastatur 22, während die Daten von ihm über einen Protokolldrucker 23 ausgegeben werden können.

Das Editiergerät 17 und der Diagnoserechner 18 sind über Schnittstellenschaltungen 25 und 26 an die Plattenlaufwerke von gemeinsamen Plattenspeichern 27, 28 angeschlossen. Eine Anschlußleitung 30 verbindet die Bedienungseinrichtung 16 mit der Vermittlungsstelle 8. An diese Anschlußleitung 30 ist das Editiergerät 17 über ein Modem 31 und der Diagnoserechner 18 über ein Modem 32 angeschlossen.

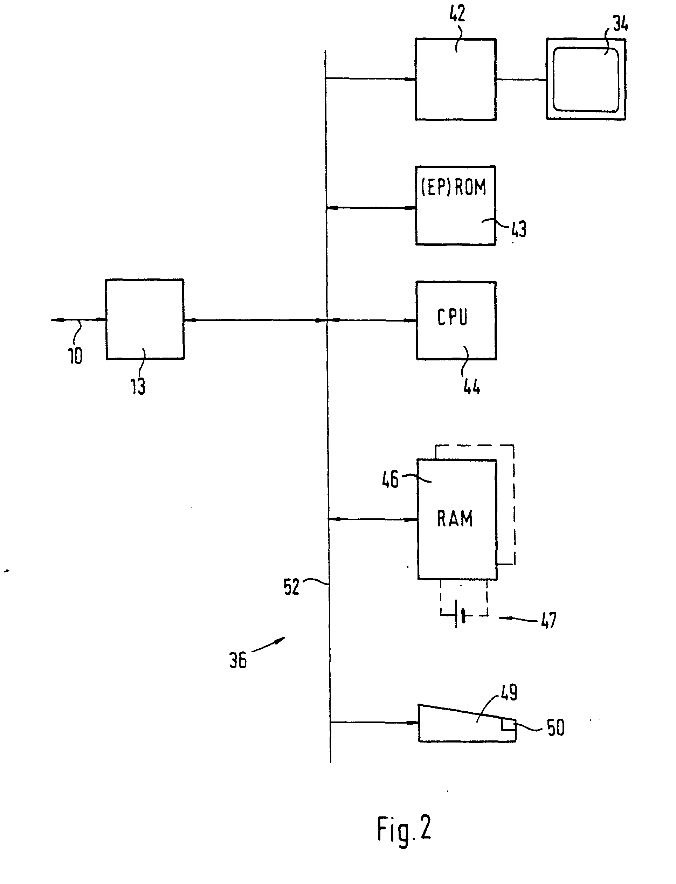

Das öffentliche Btx-Terminal 3 ist mit einem Bildschirm 34 und einem Steuerung 36 (vgl. Fig. 2) versehen. Die Steuerung 36 enthält auch einen Dekoder 37, in dem die Videoinformation so aufbereitet wird, daß sie auf dem Bildschirm 34 dargestellt werden kann.

Durch eine gestrichelte Linie 39 ist angedeutet, daß in herkömmlicher Weise On-line-Bildschirmtextseiten und erfindungsgemäß auch Off-line-Bildschirmtextseiten von der Btx-Zentrale 1 über die Anschlußleitung 9, die Vermittlungsstelle 8 und die Anschlußleitung 10 zu dem öffentlichen Btx-Terminal 3 übertragen werden. Eine strichpunktierte Linie 40 deutet die Übermittlung von Diagnoseinformation von der Steuerung 36 des Terminals 3 über denselben Weg zurück zur Btx-Zentrale 1 an, wie anhand von Fig. 2 noch im einzelnen erläutert werden wird.

Die Steuerung 36 des Terminals 3 enthält eine Bildschirmansteuerschaltung 42 für den Bildschirm 34, einen Festwertspeicher 43 - als ROM- oder EPROM-Speicher ausgeführt - der das Betriebssystem und ein Off-line-Generierungsprogramm enthält, und einen Steuerrechner oder Zentralprozessor 44 (Fig. 2) Die Steuerung 36 enthält außerdem einen Schreib-Lese-Speicher 46, der als RAM-Speicher ausgeführt ist und mit einer Puffer-Batterie versehen sein kann. Dieser Speicher 46 kann, wie in der Zeichnung angedeutet, gedoppelt sein. Es werden in ihm die Informations- und Steuerzeichen eingeschrieben, die zum Generieren der Off-line-Bildschirmtextseiten erforderlich sind. Durch die zentrale Bedienungseinrichtung 16 können in den Schreib-Lese-Speicher 46 außer der Off-line-Bildinformation auch Geräteparameter und Testprogramme eingeschrieben werden.

Eine Tastatur 49 ermöglicht die Bedienung des öffentlichen Btx-Terminals. Die Tastatur kann mit einer - z. B. durch ein Schloß gesicherten - Schalteinrichtung 50 versehen sein, um zu gewährleisten, daß die Off-line-Bildschirmtextseiten und die Betriebsparameter nur von dem Betreiber des Bildschirmtextgeräts aus der Zentrale 1 abgerufen und in den Speicher 46 des Terminals 3 eingeschrieben werden können. Die Sicherung gegen unbefugten Abruf kann auch mit einem Paßwort oder ähnlichem realisiert werden.

Die vorstehend beschriebenen Bestandteile der Terminal-Steuerung 36 sind durch einen Adress- und Datenbus 52 untereinander und mit dem Btx-Modem 13 verbunden.

Anstelle des vorstehend erwähnten Abrufs der OBS-Seiten und der Betriebs- und Geräteparameter können diese Daten auch automatisch in den Schreib-Lese-Speicher 46 des Terminals 3 geladen werden, und zwar bei jedem Einschalten der Betriebsspannung. Dabei erfolgt der Zugang zu den gewünschten OBS-Seiten und Geräteparametern durch ein automatisches Anwählen der Btx-Zentrale und nachfolgende Informationsübertragung. Diese Betriebsart hat für den Betreiber den Vorteil, daß im Off-line-Betrieb stets die aktuellste Information angeboten werden kann. Dies ist z. B. dann besonders vorteilhaft, wenn die Informationsseiten durch eine Redaktion täglich neu erstellt werden.

Die OBS-Seiten werden mit Hilfe des Editiergeräts 17 der Bedienungseinrichtung 16 erstellt, in der Btx-Zentrale 1 abgespeichert und können dann jederzeit zu den Endgeräten 3, 4 übertragen und in deren Schreib-Lese-Speicher 46 abgelegt werden. Der Speicher 46 ist entweder als nichtflüchtiger Speicher ausgeführt oder mit der Puffer-Batterie 47 versehen.

Um die erforderlichen Funktionen-Anwählen der Btx-Zentrale, Auswahl der gewünschten Bildseiten, Interpretation der Daten, Abspeichern und Ausgeben der Informationen über den Bildschirm - ausführen zu können, benötigt die Steuerung 36 entsprechende Programme, z. B. ein Off-line-Generierungsprogramm. Mit Hilfe dieser Programme, die einschließlich des erforderlichen Betriebssystems in dem Festwertspeicher 43 enthalten sind, können auch Test- und Diagnoseprogramme durchgeführt werden. Die Test- und Diagnoseprogramme werden in dem Diagnoserechner 18 der zentralen Bedienungseinrichtung 16 erzeugt, zu dem Terminal übertragen und, ähnlich wie die OBS-Seiten, in den Schreib-Lese-Speicher 46 eingeschrieben. Sie können aber auch als Btx-Information in der Btx-Zentrale abgelegt und vom Wartungspersonal am Endgerät nach Bedarf abgerufen werden. Sie laufen dann, durch den Zentralprozessor 44 - üblicherweise ein Microprozessor - gesteuert, in dem Endgerät 3, 4 ab. Die Ergebnisse der Test- und Diagnoseprogramme können entweder auf dem Bildschirm 34 direkt dargestellt und/oder zur Btx-Zentrale übertragen und dort analysiert werden, so daß sie fur eine zentrale Diagnose zur Verfügung stehen.

Die beschriebene Lösung ist gegenüber den bisher in einem Festwertspeicher des Endgerätes abgespeicherten Off-line-Bildschirmtextseiten, Betriebsparametern und Diagnoseprogrammen insofern von Vorteil, als sie die Nutzung zentraler Einrichtungen zur Service- und Wartungsunterstützung ermöglicht. Außerdem bietet sie die Möglichkeit, Programme und Daten praktisch unbegrenzt zentral zu speichern, während in dem Terminal nur etwa zwanzig Bildschirmtextseiten und eine beschränkte Anzahl sonstiger Daten gespeichert werden können. Die interne Speicherkapazität wird optimal genutzt. Die Testsoftware kann bedienungsfreundlich ausgeführt werden und ermöglicht insbesondere einen komfortablen Dialogbetrieb mit Hilfe des vorhandenen Bildschirms.

**Patentansprüche**

1. Bildschirmtextsystem mit öffentlichen Endgeräten, mit denen Informationen über ein Fernmeldenetz aus einer Bildschirmtext-Zentral (1) abgerufen und in Form von Bildschirmtext-Seiten auf dem Bildschirm (34) des Endgeräts (3, 4) dargestellt werden; wobei das Endgerät mit einem Speicher (46) versehen ist, in dem Informationen enthalten sind, die als Off-line-Bildschirmtextseiten auf dem Bildschirm dargestellt werden, dadurch gekennzechnet, daß der Speicher als Schreib-Lese-Speicher (46) ausgebildet ist; daß eine zentrale Bedienungseinrichtung (16) vorgesehen ist, die ein Editiergerät (17) aufweist, in welchen eine Off-line-Bildschirmtextseite ergebende Informations- und Steuerzeichen erstellt werden, und daß diese Zeichen von der Bedienungseinrichtung (16) an die Bildschirmtext-Zentrale (1) übermittelt werden, von der sie über das Fernmeldenetz (2) in den Schreib-Lese-Speicher (46) übertragbar sind.

2. Bildschirmtextsyste nach Anspruch 1, dadurch gekennzechnet, daß in dem Editiergerät (17) Betriebsparameter erstellt, in den Speicher (6) der Bildschirmtext-Zentrale (1) geladen und über das Fernmeldenetz (2) in den Schreib-Lese-Speicher (46) übertragen werden.

3. Bildschirmtextsystem nach Anspruch 1 oder 2, dadurch gekennzechnet, daß die zentrale Bedienungseinrichtung (16) einen Diagnoserechner (18) enthält, in welchem Test- und Diagnoseprogramme erstellt werden, die über das Fernmeldenetz (2) in den Schreib-Lese-Speicher (46) geladen werden und die von einem Steuerrechner (44) des Endgerätes (3, 4) abgearbeitet werden.

4. Bildschirmtextsystem nach Anspruch 3, dadurch gekennzeichnet, daß die Ergebnisse der Test- und Diagnoseprogramme durch den Steuerrechner (44) auf dem Bildschirm (34) des Endgerätes (3) dargestellt und/oder zu der Bildschirmtext-Zentrale (1) übertragen werden.

5. Bildschirmtextsystem nach einem der vorhergehenden Ansprüche, dadurch gekennzeichnet, daß in dem Endgerät (3) eine gesicherte Schalteinrichtung (50) vorgesehen ist, mit der Informations- und Steuerzeichen und/oder die Betriebsparameter aus der Bedienungseinrichtung (16) in das Endgerät (3) abgerufen werden.

6. Bildschirmtextsystem nach Anspruch 5, dadurch gekennzeichnet, daß die Informations- und Steuerzeichen und/oder die Betriebsparameter durch die Steuerung (36) des Endgeräts (3) bei jedem Einschalten der Betriebsspannung aus der Bedienungseinrichtung (16) abgerufen werden.

**Claims**

1. Videotex system with public terminals whereby information is called up from a videotex center (1) over a telecommunication network and presented in the form of videotex pages on the screen (34) of the terminal (3, 4), the terminal being provided with a memory (46) containing information which is presented as off-line videotex pages on the screen, characterized in that the memory is a read/write memory (46), that a central operating facility (16) is provided which includes an editing device (17) in which information and control characters giving an off-line videotex page are produced, and that said characters are transmitted from the operating facility (16) to the videotex center (1), from which they are transmissible over the telecommunication network (2) to the read/write memory (46).

2. A videotex system as claimed in claim 1, characterized in that the editing device (17) produces operating parameters which are loaded into the storage (6) of the videotex center (1) and transmitted over the telecommunication network (2) to the read/write memory (46).

3. A videotex system as claimed in claim 1 or 2, characterized in that the central operating facility (16) contains a diagnostic computer (18) in which test and diagnostic programs are produced which are loaded into the read/write memory (46) via the telecommunication network (2) and executed by a control computer (44) of the terminal (3, 4).

4. A videotex system as claimed in claim 3, characterized that the results of the test and diagnostic programs are displayed by the control computer (44) on the screen (34) of the terminal (3) and/or transmitted by the control computer (44) to the videotex center (1).

5. A videotex system as claimed in any one of the preceding claims, characterized in that the terminal (3) includes a secured switching device (50) which permits the information and control characters and/or the operating parameters to be fetched from the operating facility (16).

6. A videotex system as claimed in claim 5, characterized in that the information and control characters and/or the operating parameters are fetched from the operating facility (16) by the controller (36) of the terminal (3) whenever the supply voltage is turned on.

**Revendications**

1. Système vidéotexte avec terminaux publics au moyen desquels des informations sont extraites, par l'intermédiaire d'un réseau de télécommunication, d'une centrale vidéotexte (1) et sont affichées sous la forme de pages vidéotexte sur l'écran (34) du terminal (3, 4), le terminal étant pourvu d'une mémoire (46) dans laquelle sont contenues des informations qui sont affichées sous la forme de pages vidéotexte en différé sur l'écran, caractérisé en ce que la mémoire est agencée comme une mémoire d'écriture-lecture (46); en ce qu'il est prévu un dispositif central de service (16), qui comporte un appareil d'édition (17), dans lequel sont produits des symboles d'information et de commande définissant une page de vidéotexte en différé, et en ce que ces symboles sont transmis par le dispositif de commande (16) à la centrale vidéotexte (1), à partir de laquelle ils peuvent être transmis par l'intermédiaire du réseau de télécommunication (2) à la mémoire d'écriture-lecture (46).

2. Système vidéotexte selon la revendication 1, caractérisé en ce que dans l'appareil d'édition (17) sont établis des paramètres de fonctionnement qui sont chargés dans la mémoire (6) de la centrale vidéotexte (1) et qui sont transmis par l'intermédiaire du réseau de télécommunication (2) à la mémoire d'écriture-lecture (46).

3. Système vidéotexte selon la revendication 1 ou 2, caractérisé en ce que le dispositif central de service (16) comporte un calculateur de diagnostic (18), dans lequel sont établis des programmes de test et de diagnostic, qui sont chargés par l'intermédiaire du réseau de télécommunication (2) dans la mémoire d'écriture-lecture (46) et qui sont traités par un calculateur de commande (44) du terminal (3, 4).

4. Système vidéotexte selon la revendication 3, caractérisé en ce que les résultats des programmes de test et de diagnostic sont affichés par le calculateur de commande (44) sur l'écran (34) du terminal (3) et/ou sont transmis à la centrale-vidéotexte (1).

5. Système vidéotexte selon une des revendications précédentes, caractérisé en ce qu'il est prévu dans le terminal (3) un dispositif distributeur protégé (50), à l'aide duquel des symboles d'information et de commande et/ou les paramètres de fonctionnement sont transférés du dispositif de service (16) dans le terminal (3).

6. Système vidéotexte selon la revendication 5, caractérisé en ce que les symboles d'information et de commande et/ou les paramètres de fonctionnement sont extraits du dispositif de service (16) par la commande (36) du terminal (3) à chaque enclenchement de la tension d'alimentation.

Fig.1

Fig. 2